(19) Europäisches Patentamt
European Patent Office
Office européen des brevets

(11) **EP 2 922 614 B1**

(12) **EUROPEAN PATENT SPECIFICATION**

(45) Date of publication and mention
of the grant of the patent:
**06.11.2019 Bulletin 2019/45**

(51) Int Cl.:
***B01D 53/50*** (2006.01)       ***B01J 20/04*** (2006.01)
***B01J 20/28*** (2006.01)       ***C04B 2/10*** (2006.01)

(21) Application number: **13828813.9**

(22) Date of filing: **25.11.2013**

(86) International application number:
**PCT/IB2013/060379**

(87) International publication number:
**WO 2014/080373 (30.05.2014 Gazette 2014/22)**

(54) **SORBENT COMPOSITION AND METHOD FOR CONTROLLING THE EMISSION OF POLLUTING SUBSTANCES IN A GASEOUS EFFLUENT PRODUCED BY A COMBUSTION PROCESS**

SORBENTZUSAMMENSETZUNG UND VERFAHREN ZUR EMISSIONSKONTROLLE VON SCHADSTOFFEN IN DURCH EINEN VERBRENNUNGSPROZESS PRODUZIERTEN ABGASEN

COMPOSITION SORBANTE ET PROCÉDÉ DE CONTRÔLE DE L'ÉMISSION DE SUBSTANCES POLLUANTES DANS UN EFFLUENT GAZEUX PRODUIT PAR UN PROCÉDÉ DE COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2012   IT MI20122007**

(43) Date of publication of application:
**30.09.2015   Bulletin 2015/40**

(73) Proprietor: **Unicalce S.p.A.**
**24012 Brembilla (BG) (IT)**

(72) Inventors:
• **MORESCHI, Roberto**
**24126 Bergamo (BG) (IT)**
• **MARRAS, Roberto**
**23900 Lecco (LC) (IT)**

(74) Representative: **Pronovem**
**Office Van Malderen**
**Parc d'affaires Zénobe Gramme- bâtiment K**
**Square des Conduites d'Eau 1-2**
**4020 Liège (BE)**

(56) References cited:
**EP-A1- 0 451 133        EP-A1- 1 867 620**
**JP-A- H11 197 445        RO-B1- 119 145**
**US-A- 4 616 574        US-A- 4 882 309**

• **NEWTON G H ET AL: "CONTROL OF SOx EMISSIONS BY IN-FURNACE SORBENT INJECTION: CARBONATES VS. HYDRATES.", ENVIRONMENTAL PROGRESS 1986 MAY, vol. 5, no. 2, May 1986 (1986-05), pages 140-145, XP002711156, DOI: 10.1002/ep.670050217**

**Description**

The present invention relates to a method for controlling the emission of polluting substances in a gaseous effluent produced by a combustion process. The present invention also relates to a sorbent composition in powder form which can be used in the above method and the relative preparation process.

In particular, the present invention is especially suitable for use in the purification of a gaseous effluent deriving from a thermal treatment process of urban or industrial waste, refuse-derived fuels (so-called "RDF") or biomass. These fuels generally produce a much more complex and varied emission spectrum than that of combustion processes of fossil fuels; this spectrum, especially with respect to the inorganic components, reflects the composition of the waste fed, which, due to its very nature, is extremely heterogeneous and changeable due to commodity variations of waste, governed by the evolutionary context of life-styles and also by integrated management plans of the same waste-products (differentiated collection, the necessity of treating waste of different origins, etc.).

As is known, the qualitative and quantitative characteristics of atmospheric emissions deriving from direct combustion processes of waste and thermal conversion and energy exploitation processes of RDF), depend not only on the characteristics of the waste-products being fed (especially with respect to the lower heating value (LHV) of the waste and above all their composition) but also on the operating modes of the plant and energy recovery system, which in turn depend on the plant technology adopted.

The combination of atmospheric emissions from thermal destruction activities of urban waste and fuels deriving therefrom, generally creates two kinds of problems: the macropollutants, present in significant concentrations ($g/m^3$ or $mg/m^3$), and the micropollutants which, although present at much more modest levels ($\mu g/m^3$ or $ng/m^3$), can in any case represent a high environmental risk due to their toxicity and persistence. Traditional pollutants of combustion processes deriving from said macrocomponents of waste (essentially ashes, Cl, S, F and N), from undesired secondary reactions and the incomplete oxidation of organic carbon, such as, for example, nitrogen oxides (NOx), hydrohalogen compounds among which hydrofluoric acid (HF) and hydrochloric acid (HCl), sulfur oxides (SOx) and particulate material, belong to the first category. Inorganic micropollutants, essentially consisting of heavy metals (among which, in particular, mercury (Hg), cadmium (Cd) and lead (Pb)), can also be attributed to their presence in the ingoing waste, whereas for those of an organic nature (in particular dioxins and furans (PCDD/Fs), but also polychlorinated biphenyls (PCBs) and polycyclic aromatic hydrocarbons (PAHs)), complex synthesis reactions and decomposition which take place during the combustion and subsequent cooling of the fumes, play a determinant role.

The treatment of polluted fumes generated by the WTE (Waste To Energy) of waste, especially in direct combustion systems, is generally particularly demanding due to the low pressures of the gaseous effluents and their considerable dilution (the separation of undesirable compounds is difficult due to the strong dilution in nitrogen), which imply significant volumetric flows to be treated (typically in the order of 6-10 $Nm^3/kg_{Waste}$) and require the use of large-sized purification devices.

A series of plant and management expedients can be oriented towards limiting emissions already in the combustion phase as much as possible, first of all by effecting a combustion as complete as possible in every functioning condition of the plant which, as is well known, requires adequate temperature values, contact times and oxygen contents together with a turbulence which guarantees an intense and uniform mixing inside the furnace. A further type of intervention more specifically requires a reduction in the entity of secondary formation and reformation processes of certain polluting compounds (for example dioxins), whose minimization can be obtained by limiting, in critical areas of the plant, the presence of species involved in the formation reactions and also conditions favourable for their synthesis.

The control of the emissions is then continued by means of specific purification processes of the gaseous effluents.

Various technological options are available in the state of the art for purifying gaseous effluents. In particular, with respect to the purification of acid pollutants in gaseous effluents (for example hydrohalogen acids such as hydrofluoric acid and hydrochloric acid, and sulfur oxides, mainly present as sulfur dioxide and normally to a much lesser extent as sulfur trioxide, whose relative concentration in the fumes does not normally exceed 10% in mass with respect to the total amount of sulfurated compounds reaching approximately 2-4% of the sulfur present in the waste), in line with the best available technologies (European Commission, Integrated Pollution Prevention and Control - Reference Document on the Best Available Techniques for Waste Incineration. August 2006), the abatement of the above pollutants is effected with so-called "dry" systems, i.e. using alkaline neutralizing agents in micronized powder form, such as hydrated lime or sodium bicarbonate (the latter both synthetic and natural).

In WTE plants, these alkaline sorbents are generally injected into the gaseous flow to be purified in one or more points downstream of the combustion and energy recovery section. The injection is typically effected in an absorption reactor or along the conveyance line of the gaseous effluents, where the temperature of the gaseous effluent is generally lower than 350°C (systems which effect the neutralization of pollutants at a temperature lower than 350°C are hereinafter also indicated as "low-temperature systems"). The alkaline sorbents, which withhold the products of neutralization reactions in the form of dry particles, are subsequently separated from the gaseous effluents by means of suitable filtration systems, such as for example electrostatic precipitators or fabric filters. The neutralization reactions of the acid pollutants take place on the surface of the particles of alkaline sorbent, following adsorption, chemisorption and absorption phenomena of the pollutants. In low-temperature systems, under optimum conditions, the neutralization reactions take place at temperatures within the range of 110-250°C in relation to the specific sorbent adopted and for ideal contact times (duration of the contact between the particles of sorbent and gaseous mass of the effluent) in the order of 15-30 seconds. The operating temperature, in fact, as also the absolute and relative humidity of the fumes, in addition to the solid/gas contact times and modes between the particles of sorbent and polluting compounds to be removed, influence the performances of the neutralization reactions.

Hydrated lime, which represents one of the most widely-used sorbents in low-temperature dry abatement systems and which is mainly composed of calcium hydroxide ($Ca(OH)_2$), has optimum yields within a temperature range of 120-170°C, particularly 130-160°C. Sodium bicarbonate ($NaHCO_3$), on the other hand, exerts the best neutralizing actions at temperatures higher than 160°C, typically within the range of 170-200°C. The efficiency of this latter sorbent is in fact subject to a thermal decomposition step in which the sodium bicarbonate is converted to sodium carbonate ($Na_2CO_3$) - which represents the reactive component of the sorbent - carbon dioxide and water, said conversion being effected for temperature values higher than 140°C and preferably higher than 160°C. The necessity of reaching the above minimum temperature conditions for obtaining the transformation of sodium bicarbonate to sodium carbonate, in fact, limits the use of the sorbent for dry purification systems which operate at temperatures lower than 160°C.

For the above reasons, depending on the composition of the pollutants of the gaseous effluents, the characteristics of the filtration plants, the operating parameters of the WTE process, the removal degree required for the various pollutants and, should there be any deviation from the optimum absorption conditions, in order to ensure the desired abatement efficiency and comply with the provisions of increasingly strict regulations with respect to emissions deriving from combustion processes, a quantity of alkaline reagent must be used, under the normal operative and management conditions of low-temperature dry treatment systems, which is significantly in excess with respect to that which would be theoretically necessary on the basis of the stoichiometry of specific neutralization reactions at the basis of the purification process (stoichiometric dosage). The excess dosage with respect to the stoichiometric dosage generally ranges from 20% to 150% of the latter. The dosages of sorbent typically range from 10-15 $kg/t_{waste}$ in the case of sodium bicarbonate to 12-18 $kg/t_{waste}$ for hydrated lime. From this point of view, the use of physically improved hydrated limes (i.e. having a higher specific surface and a higher porosity) - which can be obtained, for example, using specific additives, in the preparation of the sorbent, for increasing the specific surface of the sorbent (for example, alcohols, sugars, glycols, amines, etc.), as described for example in US 4636379, DE 3620024 A1 and WO 92/09528 -, allows an increase in the exploitation rate of the sorbent in purification processes by absorption of the gaseous acid compounds, with a consequent reduction in the average specific dosage up to values in the order of 10-15 $kg/t_{waste}$.

In an attempt to overcome the above drawbacks, the treatment plants of gaseous effluents downstream of the combustion process are becoming increasingly more oriented towards comprising a double filtration step, i.e. using two filtrating systems of the fabric type in series, upstream of each of which there is the injection of the above-mentioned sorbents (generally, hydrated calcium in the first purification step and sodium bicarbonate in the second).

In technologically advanced purification plants of gaseous effluents, the low-temperature neutralization systems operate by continuously adjusting the quantity of sorbent dosed with respect to the variation in the concentration of pollutants in the gaseous effluent to be purified by means of an automatic dosage system, which refers to specific calculation algorithms based on the concentration value of the pollutants leaving the stack and integrated on the concentration value in the raw gas leaving the boiler: the control electronics, following the time trend of the polluting concentrations, maintains the dosage of sorbent at approximately the optimum quantity for obtaining the complete neutralization of the acid compounds. If any possible temporary acidity "peaks" are created, the system automatically and almost instantaneously doses a quantity of sorbent in wide excess, so as to keep the emission within the predefined threshold values and avoid exceeding the limits imposed by environmental standards. The intrinsic characteristics of these automatic dosage systems, however, are such that the sorbent continues to be overdosed in the gaseous effluents even after attenuating the acidity peak and bringing the emission level back within the predefined threshold values, with a consequent significant waste of sorbent. Furthermore, at times, the above acidity peaks are so consistent that they cannot be controlled not even with the maximum dosage of sorbent allowed by the potentiality of the system; this leads to the necessity of temporarily reducing the charge of waste fed to the combustion process with a consequent reduction in the production capacity of the plant, the latter referring to the treatment/thermo-valorisation capacity of the waste and also to the energy recovery capacity.

The purification systems of traditional gaseous effluents typically effect the reduction of acid pollutants downstream of the plant section consisting of the combustion chamber and heat-recovery boiler and their management generally exclusively aims at reducing polluting emissions into the atmosphere. With these traditional systems, the productive part of the plant destined for the thermal cycle for heat recovery and energy production, operates under high acidity conditions with consequent problems of corrosion of the equipment. The abatement of acid polluting compounds ($HCl$, $HF$, $SO_2$ and $SO_3$) is therefore extremely important, not only for minimizing the environmental impact (acid rain, etc.) but also for a good maintenance of the plant, as these pollutants can create serious problems of corrosion. In the plant structures, due to the formation of acid condensates at low-temperature(lower than 350°C) and the action of acids present in combustion residues (fly ashes) at high-temperature (over 800°C), these are deposited on the surfaces of the heat exchangers, where they firmly adhere, causing fouling and corrosion. Even when materials which are specifically resistant to acid corrosion are used, it is in any case necessary to do a periodical maintenance of the plant in order to limit the reduction in its useful life and also the progressive loss of efficiency of the recovery boiler.

Processes are known in the state of the art, which effect the neutralization of acid pollutants in high-temperature gaseous effluents by the injection of alkaline sorbents. The injection is effected close to the combustion area, where the gaseous effluents have a temperature generally within the range of 800°C-1400°C (approximately the flame temperature). These treatment systems of gaseous effluents (hereinafter also indicated as "high-temperature systems") are based on the use of limestone (calcium carbonate $CaCO_3$) or dolomite (double carbonate of calcium and magnesium $CaCO_3 \cdot MgCO_3$) in micronized powder form or compounds based on magnesium oxide or hydroxide injected into the combustion chamber in the form of aqueous suspensions (slurry).

Limestone and dolomite have been widely studied in fluidized bed combustors in which they are used as filling material of the same fluidized bed: in this type of application, good purification performances have been observed with respect to SOx, but not with respect to HCl and HF. The direct injection of calcium carbonate ($CaCO_3$) or dolomite ($CaCO_3 \cdot MgCO_3$) in the form of micronized powder has also been documented (European Commission, Integrated Pollution Prevention and Control - Reference Document on Best Available Techniques for Large Combustion Plants, July 2006) in boilers of large combustion plants for the control of emissions of sulfur oxides, where optimum reductions of 50% of the content of $SO_2$ have been observed when the sorbent is injected in a wide excess with respect to the sulfur (molar ratio Ca/S equal to 4-5). The direct injection of the sorbent into the combustion chamber, however, has the disadvantage of forming deposits of soot or encrustations on the surfaces of the heat exchangers, compelling plant operators to effect more frequent maintenance operations (for example sootblowing).

The use of aqueous dispersions based on magnesium oxide or hydroxide is also known (by atomization in the combustion section or, in the case of liquid fuels, by addition to the fuel) for the control of sulfur oxides in power generation plants fuelled by coal or fuel oil (see for example, Proceedings of the Western Fuels Symposium 2004, 19th International Conference on Lignite, Brown, and Subbituminous Coals, Oct. 12-14 2004, Billings, MT (USA), "Controlling opacity, SO3, fouling, and slagging in coal and oil fired utility boilers: technology and experience"). In the gaseous effluents produced by these plants, the sulfur oxides (indicated as a whole by "SOx") are normally present as $SO_3$ or in the form with the maximum oxidation degree of the sulfur due to the establishment of flame conditions and quantity of excess air, typically ranging from 15% to 40%, favourable for the conversion of $SO_2$ to $SO_3$. The above dispersions are also used for reducing the opacity in fumes emitted from the stack (so-called "blue plume"), for minimizing the fouling of the tube bundles of heat exchangers and therefore for preventing the formation of deposits and encrustations which can cause corrosion of the plants, in particular the heat exchange equipment (preheaters, superheaters, economizers, etc.). Also for this kind of application, however, even though the abatement efficacy with respect to SOx (especially in the form with the greatest oxidation degree $SO_3$), is known, there are no practical cases and studies for the use of these dispersions for reducing the emissions of HCl and HF.

The use of sorbents in the form of dry powder consisting of calcium hydroxide and modified calcium hydroxide (having a higher specific surface) for the high-temperature neutralization of acid polluting compounds (HCl, HF, SOx) present in gaseous effluents deriving from combustion processes and thermal treatment of waste, is also documented.

Document "Control of SOx Emissions by In-Furnace Sorbent Injection: Carbonates vs Hydrates" of Newton G H and al (ENVIRONMENTAL PROGRESS, vol. 5, no. 2, 1986), describes a method for controlling the emission of $SO_2$ in a gaseous effluent produced by a combustion process. The method comprises a step of putting the gaseous effluent, at a temperature within the range of 870-1205 °C, in contact with "Genstar-S" dolomitic hydrate, namely $CaMg(OH)_4$.

The main objective of the present invention is to overcome the drawbacks of methods for controlling emissions of polluting substances in gaseous effluents produced by combustion processes.

Within this general objective, a further objective of the present invention is to provide a method for controlling the most suitable emissions for satisfying flexibility requirements for the environmental control of combustion processes, in particular combustion processes of waste.

Another objective of the present invention is to provide a sorbent composition in powder form which has a high neutralizing efficacy of gaseous pollutants, in particular pollutants having acid characteristics, present in gaseous effluents deriving from combustion processes, in particular combustion processes of waste.

Yet another objective of the present invention is to provide a process for the preparation of the above-mentioned sorbent.

According to a first aspect, the present invention relates to a method for controlling the emission of pollutants substances in a gaseous effluent produced by a combustion process comprising at least the step of putting said gaseous effluent, at a temperature within the range of 800°C - 1400°C, in contact with a sorbent composition in powder form comprising at least calcium hydroxide ($Ca(OH)_2$), magnesium hydroxide (($MgOH)_2$) and magnesium oxide (MgO), said sorbent having a specific surface area (BET) greater than 20 $m^2/g$, wherein said magnesium oxide (MgO) is present in such a quantity that the ratio between the weight of magnesium oxide (MgO) and the total weight of the calcium hydroxide and magnesium hydroxide (sum of $Ca(OH)_2$ and $Mg(OH)_2$) is within the range of 0.15-0.40.

According to a second aspect, the present invention relates to a sorbent composition in powder form comprising calcium hydroxide ($Ca(OH)_2$), magnesium hydroxide (($MgOH)_2$) and magnesium oxide (MgO), said composition having a specific surface area (BET) greater than 20 $m^2/g$, wherein said magnesium oxide (MgO) is present in such an amount that the ratio between the weight of the magnesium oxide (MgO) and the total weight of the calcium and magnesium hydroxide ($MgO/(Ca(OH)_2 + Mg(OH)_2)$) is within the range of 0.15-0.40.

According to a further aspect, the present invention relates to a process for preparing the above sorbent composition in powder form comprising at least the following phases:

(a) calcining a dolomite rock comprising $CaCO_3$ and $MgCO_3$ at a temperature ranging from 900°C to 1100°C, obtaining a mixed calcium-magnesium oxide;
(b) selecting said mixed oxide so as to obtain a powder fraction substantially free of particles having dimensions lower than 2 mm and particles having dimensions greater than 25 mm;
(c) hydrating said selected mixed oxide by putting it in contact with an aqueous solution of at least one specific surface modifying compound;
(d) grinding said hydrated mixed oxide.

According to a non-claimed aspect, the present disclosure relates to an activated sorbent in powder form comprising calcium oxide (CaO) and magnesium oxide (MgO), said activated sorbent having a specific surface BET area greater than 20 $m^2/g$, preferably over 25 $m^2/g$, more preferably greater than 30 $m^2/g$.

For the purposes of the present invention, the sorbent composition which has not been subjected to thermal treatment at a temperature within the range of 800°C - 1400°C, is also indicated as "precursor".

The method according to the present invention is particularly suitable for controlling the emissions of polluting substances of combustion processes, in particular combustion processes of waste, such as processes carried out in WTE plants or waste incineration plants. These plants, in fact, not only have a growing necessity for being able to control emissions produced by the combustion of waste, which have extremely variable characteristics with time, they also need to optimize the energy recovery performances and overall functionality of the plant itself.

The term "waste" indicates any type of residue deriving from industrial, agricultural and/or household activities, such as urban waste, industrial waste, and the relative fuels deriving from these (so-called RDF - refuse-derived fuel). For the purposes of the present invention, the term "waste" also includes biomass, i.e. the biodegradable fraction of residues coming from agriculture, silviculture and relative industries.

The method according to the present invention envisages the high-temperature treatment of gaseous effluents produced by a combustion process by the introduction into said effluents, of an effective quantity of an alkaline sorbent composition of the dolomitic type.

The sorbent composition (precursor) according to the present invention is an alkaline dolomitic compound comprising at least calcium hydroxide ($Ca(OH)_2$), magnesium hydroxide (($MgOH)_2$) and magnesium oxide (MgO). The magnesium oxide (MgO) is present in such a quantity that the ratio between the weight of magnesium oxide (MgO) and the total weight of the calcium hydroxide and magnesium hydroxide (sum of $Ca(OH)_2$ and $Mg(OH)_2$) is within the range of 0.15-0.40, preferably within the range of 0.22-0.38.

In the precursor, the weight ratio between Mg and Ca preferably varies within the range of 0.53-0.65, even more preferably within the range of 0.58-0.63.

The titre of the precursor expressed as the sum of the elements Ca and Mg is preferably higher than 45%, preferably higher than 52%. The precursor typically also has impurities of other elements, such as, for example, Si, Al and Fe. The concentration of these impurities, expressed as the sum of the elements Si+Fe+Al, is generally lower than 0.5%, preferably lower than 0.3%.

The precursor also has a binding water content generally within the range of 10-30% by weight, preferably 15-25% by weight, more preferably 18-22% by weight.

The precursor according to the present invention has a particle-size distribution which reduces the sintering effects typically encountered in the state of the art, when sorbents in powder form are used for controlling pollutants in high-temperature treatment systems of gaseous effluents. The particle-size distribution of the precursor preferably has a $D_{50}$ index lower than 25 micrometers, more preferably ranging from 5 to 20 micrometers, more preferably ranging from 7 to 15 micrometers, even more preferably ranging from 10 to 12 micrometers. The precursor preferably has a $D_{90}$ index ranging from 55 to 75 micrometers, preferably ranging from 60 to 70 micrometers. The $D_{50}$ and $D_{90}$ indexes respectively indicate the size of the particles corresponding to 50% (median) and 90% of the cumulative curve of the particle-size distribution of the particles of the sorbent.

The precursor of the invention has a specific surface area, measured according to the BET method ("multipoint method" - 6 detection points), greater than 20 $m^2/g$, preferably over 25 $m^2/g$, more preferably greater than 30 $m^2/g$. For higher specific surface values, the effectiveness of the neutralization process of pollutants is greater. The BET specific surface can typically reach values in the magnitude of 70 $m^2/g$.

The precursor of the invention has a total pore volume ($BJH_{tot}$) measured by desorption of nitrogen and calculated with the hypothesis of pores having a cylindrical geometry according to the BJH method, higher than 0.07 $cm^3/g$, preferably within the range of 0.07-0.15 $cm^3/g$, more preferably ranging from 0.07 $cm^3/g$ to 0.10 $cm^3/g$. Furthermore, the partial pore volume, having dimensions ranging from 100 Å to 1000 Å ($BJH_{100}$-$_{1000Å}$), is preferably higher than 0.04 $cm^3/g$, more preferably ranging from 0.04 $cm^3/g$ to 0.08 $cm^3/g$.

Once the sorbent composition according to the present invention has been introduced into the hot gaseous effluent (at temperatures higher than 800°C), it is capable of effectively neutralizing the polluting substances, in particular sulfurated compounds such as $SO_2$, $SO_3$, and hydrohalogen acids (for example, HF, HCl and HBr).

The sorbent composition is injected into the gaseous effluent having a temperature ranging from 800°C to 1400°C, preferably from 850°C to 1200°C, more preferably from 900°C to 1000°C. The sorbent composition is preferably injected in the proximity of the combustion area of the process which generates the gaseous effluent. In the case of waste incineration or WTE plants, the sorbent composition is preferably injected into the "furnace-recovery boiler" section. In this area, in fact, optimum temperatures of the gaseous effluents and turbulence levels are reached, for obtaining an effective neutralization of the pollutants.

Although there is no intention of referring to any particular theory herein, it is believed that when the precursor according to the invention is injected into the gaseous effluents at the above high temperatures, it is thermally activated almost instantaneously, consequently acquiring high neutralization capacities of the pollutants, i.e. it is believed that due to the high temperature, the sorbent is structurally modified, developing a greater affinity with respect to the polluting compounds, in particular acid compounds such as SOx, HCl and HF, which guarantees a high neutralization efficiency of the above pollutants from the gaseous effluents (hereinafter also "combustion fumes"). In order to have a more effective control action of the emissions, the precursor is preferably injected into the gaseous effluents of the combustion process so that its particles can remain in contact with the gaseous mass of the fumes for a sufficiently lengthy time (contact time), preferably equal to at least 2 seconds, more preferably from 2 to 20 seconds, even more preferably from 5 to 15 seconds, and even more preferably from 8 to 10 seconds.

The thermal activation process of the precursor preferably takes place *in situ*, i.e. inside the gaseous flow of combustion fumes of which it exploits the high enthalpic content, during the use of the same sorbent.

It cannot be excluded, however, that the precursor can be thermally activated by subjecting it to a thermal treatment ex *situ; the activated sorbent* is therefore subsequently introduced into the gaseous effluents to be treated. The thermal treatment *ex situ* is preferably effected in air, more preferably in dry air with low contents of $CO_2$ (typically lower than 400 ppm by volume). The treatment is more preferably effected in an inert gas (for example nitrogen).

In order to maximize the effectiveness of the sorbent composition or activated sorbent, this is preferably injected in the proximity of at least an area in which the combustion process is being carried out. The sorbent, however, can also be injected along the conveyance line of the gaseous effluents, when these still have a sufficiently high temperature. The injection point of the sorbent composition or activated sorbent, moreover, is preferably selected also taking into consideration the turbulence of the gaseous mass to be treated, in order to ensure an adequate dispersion of the powder in the fumes and an adequate contact time along the whole conveyance line of the fumes, thus preventing the sorbent from being channelled in preferential trajectories.

The sorbent composition and the activated sorbent, object of the present disclosure, also have a beneficial influence on the composition and on the rheology of the combustion ashes, attenuating fouling and corrosion phenomena of the heat-exchange equipment necessary for recovering the heat from the gaseous effluents, for example in order to produce thermal and/or electric energy. Experimental evidence collected by the Applicant, in fact, seems to indicate that the precursor or activated sorbent of the disclosure influences the chemical composition and the physical structure of the combustion ashes, inhibiting their corrosive capacity. In particular, the ashes resulting from combustion processes in which the sorbent according to the present invention is used, have a higher melting point (with respect to the ashes of processes in which other sorbents are used). The ashes are, moreover, substantially non- (or only slightly) agglomerating, extremely friable and only slightly adherent to the heat-exchange surfaces; once deposited, they therefore produce layers having a reduced thickness, which are dry and powdery and which can consequently be easily removed from the same gaseous effluent or with the help of normal cleaning systems (for example, fixed or retractable high-pressure air or vapour blowers; cleaning systems of the mechanical, vibrational or percussion type). In view of the above advantages, it is evident that the present invention helps to minimize problems of fouling of the heat-exchange surfaces, guaranteeing a greater production efficiency of the boiler and a longer duration of its operability.

The experimental evidence collected by the Applicant also indicates that, following thermal activation treatment, the dolomitic sorbent is subject to peculiar physical modifications which cause an increase in the specific surface area (BET) and an increase in the volume of pores having dimensions within the range of mesopores and macropores. As already indicated, although there is no intention of referring to any particular theory herein, it is believed that this modification is favoured, in particular, by the presence of magnesium which, during the thermal activation, may act as a particle structuring agent, preventing the collapsing of the porosity and favouring the diffusion of the pollutants inside the particles of sorbent with a consequent increase in the purification yields. It is also believed that the above effect of magnesium is more marked when it is present in the sorbent in the form of MgO.

The activated sorbent is in the form of dolomitic oxide (calcium and magnesium oxide) preferably having a Mg:Ca ratio higher than 0.50, more preferably ranging from 0.57 to 0.59.

The activated sorbent preferably has a titre, expressed as sum of the elements Ca+Mg, higher than 60%, preferably ranging from 60% to 71%, more preferably ranging from 64% to 70%.

The activated sorbent preferably has a BET specific surface, evaluated by multilayer adsorption of nitrogen on the surface according to the BET method ("multipoint method" - 6 detection points), greater than 20 $m^2/g$, preferably over 25 $m^2/g$, more preferably greater than 30 $m^2/g$. For higher specific surface values, the efficacy of the neutralization process of pollutants is greater. The BET specific surface can typically reach values in the order of 70 $m^2/g$.

The activated sorbent preferably has a total pore volume ($BJH_{tot}$) measured by desorption of nitrogen and calculated with the hypothesis of pores having a cylindrical geometry according to the BJH method, equal to at least 0.08 $cm^3/g$, preferably within the range of 0.08-0.20 $cm^3/g$, preferably ranging from 0.10 to 0.15 $cm^3/g$. The activated sorbent preferably has a partial pore volume having dimensions ranging from 100 Å to 1000 Å ($BJH_{100-1000Å}$), equal to at least 0.05 $cm^3/g$, more preferably ranging from 0.06 $cm^3/g$ to 0.10 $cm^3/g$.

The thermally activated sorbent shows an increase in the specific surface and pore volume, which could be due to the loss of binding water molecules and reorganization of the internal structure of the sorbent. It is therefore possible that incipient sintering conditions intervene, modifying the pore distribution, thus enhancing the neutralization properties of the pollutants of the sorbent under the conditions of use (small-sized pores coalesce to form larger-sized pores with a negligible effect on the total volume of the pores themselves and also on the particle sizes which remain constant).

In this respect, it should be pointed out that the dolomitic oxides known in the state of the art, typically characterized by low BET specific surface values (typically lower than 5 $m^2/g$), do not offer performances comparable to those of the sorbent of the present invention. These sorbents, in fact, not only do not have a high specific surface and porosity before being introduced into the gaseous effluents to be treated, but are also subject to a more rapid sintering following exposure to high temperatures.

Analogously, once sorbents such as high-calcium hydrated limes, whether they be of normal production or physically improved (with a high specific surface), and dolomitic hydrated limes of normal production, have been thermally treated, they indicate a greater and more rapid sintering degree with respect to the sorbent object of the present invention.

In this case, for normal high-calcium hydrated limes, after thermal activation due to decomposition into calcium oxide with the release of binding water, for temperature values in the order of 500-600°C, there is an initial increase in the specific surface which passes from typical values of around 15-18 $m^2/g$ up to values higher than 30 $m^2/g$ (see for example JAPCA Vol. 39, No. 1, 1989, pages 55-57, "Some Physico-Chemical Aspects of Dry Sorbent Injection for Removal of HCl and HF from Waste Incinerator Flue Gases"). For temperature values higher than 600°C, however, the specific surface undergoes a rapid decrease whose entity depends on the increase in the temperature itself, i.e. the greater the increase in temperature, the more marked this decrease will be; this deterioration in the specific surface, which takes place within a relatively low temperature range, seems to derive from sintering effects. At even higher temperatures, the sintering effects become progressively more marked to such an extent that the specific surface becomes minimum, and so as to completely inhibit the chemical reactivity of the sorbent with respect to the acid pollutants. Up to 600°C, the structure of the particles remains the same and there is no sign of sintering: the thermal decomposition at this temperature causes an increase in the specific surface. At temperatures higher than 800°C, the particle structure changes visibly and at 1000°C, the sintering becomes extremely evident as a reduction in the porosity, without there being, however, any significant change in the characteristic particle size, as is the case, on the contrary, at temperature values exceeding 1100°C in which there is the complete destruction of the porosity and also an increase in the characteristic size of the particle grains. Analogously, with respect to physically improved high-calcium hydrated limes, characterized by a high specific surface (BET > 30 $m^2/g$), for temperature values higher than 600°C, the reactivity with respect to acid pollutants, with all the problems of the decline in the specific surface described above, is completely similar to that of normal high-calcium hydrated limes; consequently, the use of these physically improved sorbents can only be truly justified in neutralization processes of acid pollutants at temperatures lower than 600°C, in which there is no dehydration phenomenon with a loss of binding water and decomposition to calcium oxide.

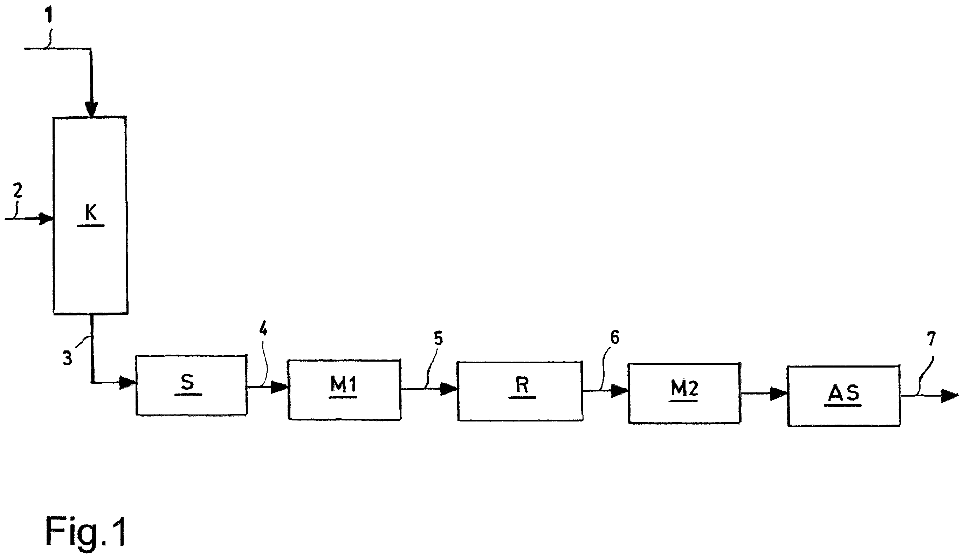

With reference to Figure 1, a possible process for the preparation of the sorbent composition, object of the present invention, is described hereunder. Figure 1 is a schematic representation of a possible embodiment of the process according to the present invention.

The sorbent composition in powder form according to the present invention can be prepared by calcination of a dolomite rock and subsequent hydration of the dolomitic oxide (mixed calcium and magnesium oxide) obtained from the calcination. The dolomite rock preferably has a carbonate content (expressed as $CaCO_3+MgCO_3$) equal to at least 96% by weight, more preferably equal to at least 98% and even more preferably at least 99%. The percentage ratio $MgCO_3:CaCO_3$ is preferably higher than or equal to 0.70, more preferably higher than 0.80. The Si, Fe and Al impurities, expressed as the sum of these elements, are preferably lower than 0.5% by weight, more preferably lower than 0.3% by weight.

The dolomite rock 1 is subjected to calcination at a temperature preferably ranging from 900°C to 1100°C. The duration of the treatment ranges from 12 to 36 hours, preferably within the range of 24-28 hours. The calcinations, which can be effected, for example, in a vertical type kiln K, leads to the transformation of the calcium and magnesium carbonate of the dolomite rock into the corresponding mixed calcium and magnesium oxide. The fuel 2 used in the calcination kiln K is preferably methane, as it reduces the deposition of impurities onto the calcined product 3 to the minimum. The calcined product 3 leaving the kiln K is substantially composed of a mixed calcium and magnesium oxide. This compound preferably has a titre (expressed as the sum of CaO+MgO) higher than 96% by weight, more preferably higher than 98% by weight. The calcined product 3 generally has maximum dimensions in the order of approximately 90 mm. The maximum dimension of the calcined product is preferably about 65 mm. The calcined product 3 is then subjected to sieving, for example by means of a series of sieves S. The purpose of the sieving is to select a dolomitic oxide 4 consisting of a fraction of powders substantially free of particles having dimensions lower than 2 mm (underscreen) and particles having dimensions larger than 25 mm (overscreen), more preferably free of particles having dimensions larger than 15 mm, even more preferably free of particles having dimensions larger than 8 mm. In particular, the elimination of the underscreen fraction corresponds to the requirement of eliminating particles which have undergone excessive calcination; it is believed, in fact, that these particles - which are concentrated in the finest fraction of the powder - may have undergone a partial or total sintering and consequently their hydration does not allow the porosity and specific surface characteristics of the sorbent precursor, object of the present invention, to be obtained; the elimination of the overscreen fraction, on the other hand, is aimed at eliminating the fraction of particles that may contain not completely decarbonated parts.

The calcium and magnesium oxide selected 4 is preferably subjected to grinding, for example in a classifier mill (M1) equipped with an air separation system, in order to reduce and select the dimensions of the particles of sorbent by both size and density. The grinding preferably allows a powder fraction to be obtained, which is substantially free of particles having dimensions larger than 2 mm, more preferably larger than 1 mm.

The ground calcium and magnesium oxide 5 leaving the mill M1 is then hydrated in order to obtain the conversion of the dolomitic oxide into the respective hydroxide. The hydration is effected according to techniques known in the art. The hydration is preferably carried out at atmospheric pressure so as to have a substantial conversion of CaO into $Ca(OH)_2$ and only a partial conversion of MgO into $Mg(OH)_2$, thus obtaining a sorbent composition comprising $Ca(OH)_2$, $Mg(OH)_2$ and MgO.

In order to obtain the structural characteristics described above for the sorbent composition of the invention, the hydration is carried out by putting the ground oxide 5 in contact, for example in a hydration reactor R, with an aqueous solution comprising at least one modifying compound of the specific surface, as described, for example, in WO 92/09528. Examples of preferred compounds that can be used as modifiers of the specific surface of the sorbent are:

-   alkylenediols having general formula $HO-(AO)_n-H$, wherein A is an alkylene group having from 5 to 10 carbon atoms and n is an integer ranging from 1 to 5.
-   alkanolamines having general formula R-NH-(BOH), wherein R is hydrogen or a linear or branched aliphatic alkyl group having from 1 to 6 carbon atoms, and A is a group $C_2H_4$- or $C_3H_6$-, or mixtures of one or more of said alkylenediols and alkanolamines. The following compounds are particularly preferred: ethylene glycol, diethylene glycol, triethylene glycol, monoethanolamine, diethanolamine, triethanolamine and mixtures thereof.

Generally the quantity of modifying compound used with respect to the dolomitic oxide to be hydrated (compound: dolomitic oxide (CaO+MgO)) is within the range of 0.1-5% by weight, even more preferably within the range of 0.2%-3% by weight, even more preferably within the range of 0.5%-2.5% by weight.

The quantity of water used is in a weight ratio water:dolomitic oxide (CaO+MgO) within the range of 0.6:1 - 0.8:1.

At the end of the hydration process, the hydrated product 6 leaving the hydration equipment R typically has a free water content (i.e. water evaporable from the sorbent thermostat-regulated at 105°C) lower than 2% by weight with respect to the weight of the hydrated sorbent, preferably lower than 1% by weight, even more preferably lower than 0.5%.

The hydrated product 6 is then subjected to grinding, for example in a classifier mill M2 (and possibly refined in an air separator AS) until the sorbent composition 7 of the invention is obtained. The sorbent composition 7 is preferably ground until it has a particle-size distribution characterized by a $D_{50}$ value lower than or equal to 25 micrometers, more preferably ranging from 5 to 20 micrometers, more preferably ranging from 7 to 15 micrometers, even more preferably ranging from 10 to 12 micrometers.

The sorbent composition is preferably ground and selected so as to have a $D_{90}$ index ranging from 55 to 75 micrometers, preferably from 60 to 70 micrometers.

As already specified, the composition of the invention also comprises magnesium oxide. The presence of this oxide in the precursor, in fact, favours the development of the surface area and porosity characteristics in the activated sorbent following contact with the high-temperature gaseous effluents and, at the same time, prevents undesired sintering phenomena during use.

The high BET specific surface values and total pore volume values $BJH_{tot}$ which characterize the precursor of the activated dolomitic sorbent object of the present invention, together with its specific chemical composition, allow these physical properties to be increased or maintained for the time of use after the activation phase on the basis of the average residence times of the sorbent in the plant section consisting of furnace and recovery boiler of a WTE plant which, due to the peculiar fluid-dynamic characteristics typical of these plants, generally reflect an average residence time of the fumes in this high-temperature area normally, in the order of 6-10 seconds (which however can also be longer as the contact between the gaseous effluent and the sorbent can also continue downstream of the boiler along the line of fumes).

The reaction products deriving from the neutralization of the acid pollutants present in the gaseous effluents (i.e. the products generated by the interaction of the sorbent with the gaseous pollutants present in the effluent) are mainly evacuated (about 50-75% by weight) in the ash recovery section of the boiler, whereas the remaining part of sorbent is transported along the conveyance line of the fumes as far as the treatment section, which operates at low temperature. The sorbent, together with the reaction products supported by this, is separated here from the gaseous flow.

An important advantage of the present invention is that it substantially enables a pre-neutralization of the acid pollutants, which allows a reduction in the load to the traditional fume treatment line (which operates under "low"-temperature conditions) downstream of the plant section consisting of furnace-recovery boiler. A second advantage is that it optimizes the control of the pollutants due to the reduction in the typical fluctuations in concentration to which waste incineration plants are frequently subject due to the levelling of the temporary acidity peaks. The term "acidity peaks" refers to the concentration levels of a pollutant, in any case having a temporary duration, which exceed the average concentration value of said pollutant by a certain quantity (for example, 30%), taken as reference (for example, the average value can be calculated on the basis of a yearly average of average hourly values).

The sorbent composition, object of the present invention, improves the state of the known art as its use at high temperatures, i.e. by injection into the gaseous combustion effluent (approximately ranging from 800°C to 1400°C), is more efficient with respect to the use of micronized dolomite used as filling material of fluidized bed combustors or injected into the furnace in combustion plants, and also with respect to the use of dispersions of magnesium oxide or hydroxide. In particular, the sorbent composition according to the present invention exerts an effective pre-neutralization action of the acid pollutants present in gaseous effluents deriving from the incineration of waste with average purification yields at least 30% higher with respect to the average concentration value of the specific pollutants taken as reference (for example, the average value can be calculated on the basis of a yearly average of the average hourly values) and typically in the order of 40% for HCl, higher than 40%, and typically in the order of 75% for SOx, higher than 80%, and typically around 95% for HF. These results, moreover, are obtained with effective dosages of precursor or activated sorbent extremely close to the stoichiometric dosage (calculated considering the calcium and magnesium titre of the precursor or activated sorbent and the load of all three acids present in the fumes and their molar ratio (Ca+Mg) : (S+2Cl+2F)) and, in any case, generally lower than 1.5 times the value of said stoichiometric ratio. For reference purposes, an example of average concentrations of the acid pollutants present in a gaseous effluent produced by a combustion process of urban waste is provided herein: 600-1000 mg/Nm$^3$ of HCl, 40-200 mg/Nm$^3$ of SOx, 3-25 mg/Nm$^3$ of HF.

The sorbent, object of the present invention, therefore allows a significant saving of traditional sorbents (sodium bicarbonate, calcium hydroxide) necessary for neutralizing the above pollutants in low-temperature abatement systems, generally situated downstream of the "furnace-recovery boiler" plant section. Furthermore, the method according to the present invention allows optimization of the control of pollutants in a gaseous effluent produced by a combustion process, thanks to the fact that it is able to significantly reduce fluctuations in the concentration of the pollutants with time, such as those generally observed in emissions of waste incineration plants.

Furthermore, the use of the present sorbent after obtaining a significant reduction in the load of acid pollutant in the thermal recovery section of the plant, mitigates the aggressiveness of the fumes and reduces the risk of triggering acid corrosion phenomena, which in the specific case of WTE plants are particularly aggravated by the massive presence of HCl. The use of the sorbent of the present invention also modifies the composition and rheology of the fly ashes, increasing the content of magnesium compounds and calcium and magnesium salts, reducing fouling and slagging phenomena and maintaining high heat-exchange efficiencies for long operating periods with an improved plant productivity.

A further advantage of the use of the sorbent, object of the present invention, with respect to the use in the known art of aqueous dispersions of magnesium oxide or hydroxide, lies in the fact that, as it is added to the process in dry powder form and ready for use, in addition to being easy and manageable to use, it does not have any aqueous component which can reduce the energy recovery efficiency of the system; the evaporation of 1 kg of water of an aqueous dispersion ready to be injected into the boiler, starting from storage conditions or preparation at room temperature (20°C) and atmospheric pressure equal to 1 atm, is in fact equal to approximately 2595 kJ/kg (620 kcal/kg). Furthermore, the use of aqueous dispersions requires the preparation of sophisticated dispersion systems for injection into very specific points of the combustion apparatus through lances and atomizing nozzles which must allow an optimum atomization in the form of droplets in the stream of fumes; these systems are generally sophisticated and costly with respect to the materials and also from an operative point of view.

The use of the sorbent, object of the present invention, as high-temperature neutralizing agent represents a minimally invasive technique, which does not require significant modifications to the plant and, above all, can be used economically on numerous types of combustion plants.

Other characteristics and details of the present invention are described in the following examples which, however, should not be considered as limiting the protection scope defined by the enclosed claims.

## EXAMPLE 1

A series of laboratory tests were carried out on the dolomitic precursor, object of the present invention, in order to evaluate the effects of a thermal treatment (activated sorbent) comparable to that to which the sorbent is subjected under normal conditions of use.

Comparative tests were carried out on ordinary sorbents available on the market, such as dolomitic hydrated lime and high-calcium hydrated lime. These limes are of normal production, i.e. they have not been subjected to particular synthesis processes or post-synthesis treatment to increase their specific surface or porosity.

The tests for evaluating the physical characteristics of the thermally activated sorbents were effected using a fixed-bed reactor, maintained at a predefined temperature of about 1000°C and under an inert nitrogen atmosphere. The sample of precursor tested was left in the reactor at the above temperature for a time (activation time) equal to 10 seconds (this duration being considered the maximum operating time of the sorbent under real application conditions).

The chemical composition of the precursor is the following: $Ca(OH)_2 + Mg(OH)_2$ = 80.5% by weight, MgO = 19.2% by weight, Mg:Ca = 0.61, impurities $SiO_2 + Fe_2O_3 + Al_2O_3$ = 0.30% by weight.

The sorbent thus activated (sample A) was cooled in a laboratory drier and then subjected to a porosimetric examination by means of a gas absorption analyzer Quantachrome Instruments - Nova 2000 Series.

The comparative tests, carried out after activation of the dolomitic hydrated lime (sample B) and high-calcium hydrated lime (sample C), were effected according to the same procedure.

A series of six measurements was done for each sample tested, in order to evaluate: specific surface (BET), overall pore volume ($BJH_{tot}$) and overall pore volume having dimensions within the range of 100-1000 Å ($BJH_{100-1000Å}$). The results of these measurements (average value) are indicated in Table 1.

TABLE 1 - Evolution of the physical characteristics of the thermally activated samples

| Sorbent Sample | Precursor (before thermal activation at T = 1000°C for a time t = 10 seconds) | | | Activated sorbent (after thermal activation at T = 1000°C for a time t = 10 seconds) | | |
|---|---|---|---|---|---|---|
| | BET | $BJH_{tot}$ | BJH (100-1000Å) | BET | $BJH_{tot}$ | BJH (100-1000Å) |
| A | 26 | 0.07 | 0.048 | 32 | 0.11 | 0.08 |
| B | 17 | 0.045 | 0.028 | 19 | 0.054 | 0.041 |
| C | 16 | 0.08 | 0.052 | 18 | 0.05 | 0.034 |

The results of Table 1 show how the activated sorbent indicates an increase in the specific surface and porosity with respect to the precursor which, expressed in percentages, are respectively in the order of 23% and 57%, with a percentage increase in the partial volume of pores having dimensions ranging from 100 Å to 1000 Å ($BJH_{100-1000Å}$) approximately equal to 67%.

## EXAMPLE 2

The activated sorbent was subjected to a series of laboratory tests in order to evaluate the high-temperature neutralization yields of the gaseous compounds $SO_2$, HCl and HF, in comparison with traditional sorbents, hydrated lime and sodium bicarbonate, the latter used under their optimum performance conditions with respect to the neutralization (at low temperature) of the above acid compounds.

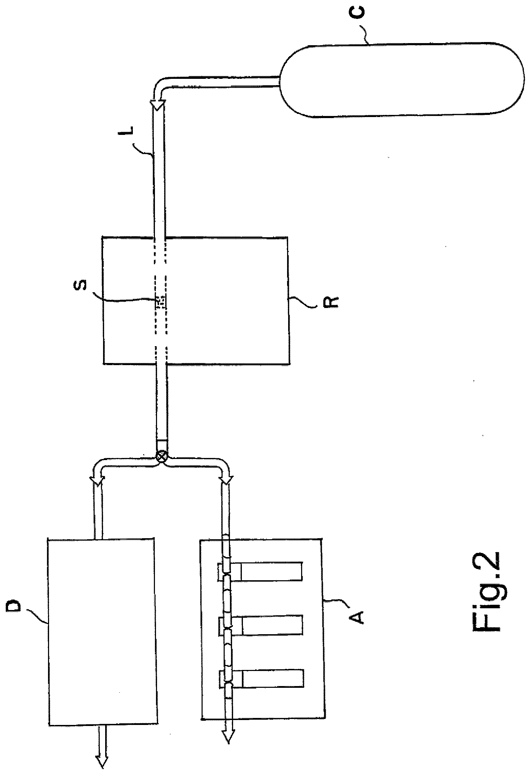

The tests for evaluating the abatement yields of the sorbent were effected in a laboratory-scale pilot plant of the type schematically illustrated in Figure 2.

With reference to Figure 2, the pilot plant is composed of:

- a glass line L for transporting a flow of gas to be purified;
- a thermostat-regulated reactor R containing a sample of the sorbent S to be tested, positioned in the form of a fixed bed inside the line L;
- one or more cylinders C containing a mixture of gases having a certified composition for feeding the flow of gas to be purified onto the sorbent S inside the reactor R;
- a qualitative and quantitative analysis unit D, equipped with a detector of the FT-IR type, for determining the concentrations of the residual polluting species in the gas flow leaving the reactor R, downstream of the contact of gas with the sorbent S;
- an absorption unit A used alternatingly with the unit D for collecting the gas flow leaving the reactor R (when the unit D is not functioning).

The plant is also equipped with gas-flow, temperature and pressure meters (not shown in Figure 2) .

The mixtures of gas used for the tests were the following:

- for the $SO_2$ test, mixture of $SO_2$ in nitrogen (concentration 1069.0 mg $SO_2/Nm^3$);
- for the HCl test, mixture of HCl in nitrogen (concentration 1433.1 mg $HCl/Nm^3$);
- for the HF test, mixture of HF in nitrogen (concentration 44.6 mg $HF/Nm^3$).

None of the mixtures of gas indicated above contain either water or carbon dioxide.

The tests were effected maintaining the activated sorbent (identified with the letter F and corresponding to the activated sample A of Example 1) in the thermostat-regulated reactor under different high-temperature conditions (T = 800°C, T = 900°C and T = 1050°C) and the traditional sorbents, high-calcium hydrated lime (identified with the letter D) and sodium bicarbonate (identified with the letter E), at optimum thermal values for exerting their specific neutralizing capacity (low temperature conditions - T = 135°C and T = 190°C) . The quantity of each sorbent used for each test corresponds to twice the quantity of sorbent theoretically necessary (estimated considering that the reaction takes place completely at 100%, i.e. the stoichiometric dosage), for neutralizing the load of specific acid pollutant tested each time.

A series of six measurements of the neutralization yields with respect to the specific pollutant tested, was effected for each sorbent. Tables 2-4 below indicate the abatement yields measured for each of the samples described above with respect to the pollutants $SO_2$, HCl and HF.

The yields were calculated as percentage value of the concentration of polluting compound downstream of the treatment ($[SO_2]_{out}$, $[HCl]_{out}$, $[HF]_{out}$) with respect to the total concentration of polluting compound present in the gaseous flow leaving the cylinder and introduced into the system ($[SO_2]_{in}$, $[HCl]_{in}$, $[HF]_{in}$) as follows:

$$\frac{[SO_2]_{in} - [SO_2]_{out}}{[SO_2]_{in}} \times 100$$

$$\frac{[HCl]_{in} - [HCl]_{out}}{[HCl]_{in}} \times 100$$

$$\frac{[HF]_{in} - [HF]_{out}}{[HF]_{in}} \times 100$$

The tables show the minimum and maximum abatement yield value observed in the six measurements.

TABLE 2 - Abatement yield $SO_2$

| Sorbent | Abatement yield $SO_2$ (%) | | | | |
| | T = 135°C | T = 190°C | T = 800°C | T = 900°C | T = 1050°C |
|---|---|---|---|---|---|
| D | 22-28 | 17-21 | ---- | ----- | ----- |
| E | 32-39 | 49-54 | ---- | ----- | ----- |
| F | ----- | ----- | 69-76 | 78-82 | 78-83 |

TABLE 3 - Abatement yield HCl

| | Abatement yield HCl (%) | | | | |
|---|---|---|---|---|---|
| *Sorbent* | *T = 135°C* | *T = 190°C* | *T = 800°C* | *T = 900°C* | *T = 1050°C* |
| D | 51-57 | 59-66 | ----- | ----- | ----- |
| E | 58-62 | 68-73 | ----- | ----- | ----- |
| F | ----- | ----- | 65-68 | 67-72 | 69-72 |

TABLE 4 - Abatement yield HF

| | Abatement yield HF (%) | | | | |
|---|---|---|---|---|---|
| *Sorbent* | *T = 135°C* | *T = 190°C* | *T = 800°C* | *T = 900°C°* | *T = 1050°C* |
| D | 88-95 | 92-95 | ----- | ----- | ----- |
| E | 19-25 | 24-28 | ----- | ----- | ----- |
| F | ----- | ----- | 79-85 | 84-86 | 83-87 |

EXAMPLE 3

A real-scale experiment was carried out for treating an effluent deriving from a WTE plant of urban waste composed of a line with a grate type furnace and an integrated recovery boiler having an overall treatment capacity equal to about 230 tons per day of waste and a thermal load in the order of 28 MW and a superheated steam production of about 32 t/h (40 bar of pressure and temperature of 400°C). The plant configuration conceived for the purification of combustion effluents consists, in sequence, of a dry reaction tower with the injection of sodium bicarbonate and activated carbon, a fabric filter, a catalytic DeNOx system (SCR) and a wet scrubber. The flow-rate of the gaseous effluents is equal to about 44000-46000 $Nm^3$/h with typical concentrations of acid pollutants ($SO_2$, HCl, HF) in the untreated combustion fumes in the order of 1000-1200 mg HCl/$Nm^3$ (average value: 1080 mg HCl/$Nm^3$), 25-41 mg $SO_2$/$Nm^3$ (average value: 32 mg $SO_2$/$Nm^3$) and 10-15 mg HF/$Nm^3$ (average value: 11 mg HF/$Nm^3$) and an average specific consumption of sodium bicarbonate equal to 16-18 kg $NaHCO_3$/$t_{Waste}$.

The test was carried out considering the concentrations of pollutants at the outlet of the recovery boiler and the specific consumptions of sodium bicarbonate in the 5 months prior to the experiment (Scenario 3.0) and comparing these concentrations with those of a period having an equal duration in which the precursor of the present invention was used (Scenario 3.1), injected into the plant section composed of the furnace and integrated recovery boiler, specifically in the post-combustion area (temperature of the fumes about 950°C), with automatic dosage, aimed at maintaining the concentrations of the pollutants leaving the boiler approximately at a set reference point, corresponding to an effective average dosage equal to about 1.14 times the stoichiometric dosage (the latter was calculated considering the titre of calcium and magnesium of the precursor and load of all three acids present in the fumes and their molar ratio (Ca+Mg):(S+2Cl+2F)). During the two periods of the test, the emission to the stack proved to be comparable to the threshold value predefined by the set point.

The average results of the test are indicated in Table 5 below:

TABLE 5 - Removal of pollutants and average specific consumption of sodium bicarbonate

| | *Average concentrations at boiler exit (mg/$Nm^3$)* | | | *Average specific consumption of sodium bicarbonate (kg/$t_{Waste}$)* |
|---|---|---|---|---|
| *Test conditions* | *[$SO_2$]* | *[HCl]* | *[HF]* | *$NaHCO_3$* |
| Scenario 3.0 | 31.1 | 1079.8 | 10.6 | 17.58 (100%) |
| Scenario 3.1 | 3.3 | 632.9 | 1.8 | 8.96 (51%) |
| Difference | -27.8 | -446.9 | -8.8 | -8.62 (-49%) |
| Abatement yield (%) | 89.5 | 41.4 | 83.0 | ------ |

### EXAMPLE 4

A further real-scale experiment was carried out for treating an effluent deriving from a WTE plant of urban waste composed of a line with a grate type furnace and an integrated recovery boiler having an overall treatment capacity equal to about 150 tons per day of waste and a thermal load in the order of 21 MW and a superheated steam production of about 25 t/h (38 bar of pressure and temperature of 380°C). The plant configuration conceived for the purification of combustion effluents consists, in sequence, of an electrostatic precipitator, a "dry" contact reactor into which sodium bicarbonate and activated carbon, suitably premixed, are injected, a fabric filter and a catalytic DeNOx system (SCR). The flow-rate of the fumes is equal to about 45000-47000 $Nm^3$/h with typical concentrations of acid pollutants ($SO_2$, HCl, HF) in the composition of untreated combustion fumes in the order of 600-800 mg HCl/$Nm^3$ (average value: 728 mg HCl/$Nm^3$), 35-80 mg $SO_2$/$Nm^3$ (average value: 55 mg $SO_2$/$Nm^3$) and 1-6 mg HF/$Nm^3$ (average value: 3 mg HF/$Nm^3$) and an average specific consumption of sodium bicarbonate equal to 16-18 kg $NaHCO_3$/$t_{Waste}$.

Also in this case, the test was carried out considering the concentrations of pollutants at the outlet of the recovery boiler and the specific consumptions of sodium bicarbonate in the month prior to the experiment (Scenario 4.0) and comparing the same with what was observed during the test period (Scenario 4.1), which lasted a month, during which the innovative precursor of the present invention was injected into the oven-recovery boiler section, specifically into the combustion chamber (temperature of the fumes about 1000°C), with automatic dosage, aimed at maintaining the concentrations of the pollutants leaving the boiler approximately at a set reference point, corresponding to an effective average dosage equal to about 1.08 times the stoichiometric dosage, considering the titre of calcium and magnesium of the precursor and load of all three acids present in the fumes and their molar ratio (Ca+Mg) : (S+2Cl+2F).

During the two periods of the test, the emission to the stack proved to be comparable to the threshold value predefined by the set point.

The average results of the test are indicated in Table 6 below:

TABLE 6 - Removal of pollutants and average specific consumption of sodium bicarbonate

| | Average concentrations at boiler exit (mg/$Nm^3$) | | | Average specific consumption of sodium bicarbonate (kg/$t_{Rifiuto}$) |
|---|---|---|---|---|
| *Test conditions* | [$SO_2$] | [HCl] | [HF] | $NaHCO_3$ |
| Scenario 4.0 | 54.2 | 727.6 | 3.39 | 17.61 (100%) |
| Scenario 4.1 | 32.0 | 494.1 | 0.02 | 11.34 (64%) |
| Difference | -22.2 | -233.5 | -3.4 | -6.27 (-36%) |
| Abatement yield (%) | 40.9 | 32.1 | 99.4 | ------ |

### EXAMPLE 5

A further real-scale experiment was carried out for treating an effluent deriving from a WTE plant of urban waste composed of two structurally identical lines with a grate type furnace and an integrated recovery boiler each having a treatment capacity equal to about 580 tons per day of waste, a thermal load in the order of 68 MW and a superheated steam production of about 75 t/h (52 bar of pressure and temperature of 425°C). The plant configuration conceived for the purification of combustion effluents for each line consists, in sequence, of an electrostatic precipitator, a "dry" contact reactor into which sodium bicarbonate and activated carbon, suitably premixed, are injected, a fabric filter and a catalytic DeNOx system (SCR). The flow-rate of the fumes under the maximum continuous load conditions is within the range, for each line, of 126000-130000 $Nm^3$/h with typical concentrations of acid pollutants ($SO_2$, HCl) in the composition of untreated combustion fumes in the order of 400-700 mg HCl/$Nm^3$ (average value: 600 mg HCl/$Nm^3$), 20-80 mg $SO_2$/$Nm^3$ (average value: 45 mg $SO_2$/$Nm^3$) and an average specific consumption of sodium bicarbonate equal to 15-16 kg $NaHCO_3$/$t_{Waste}$.

The test was effected comparing the functioning of the two lines, considering the concentrations of pollutants at the outlet of the recovery boiler and the specific consumptions of sodium bicarbonate within a same time period, during which the innovative precursor, object of the present invention, was not dosed on one line (reference) (Scenario 5.0, Line 5.0) whereas the dosage of said precursor was effected on the other line (Scenario 5.1, Line 5.1).

The test, programmed so as to reduce to the minimum the possibility of having significant variations in the characteristics of the waste sent to WTE in the two scenarios, was aimed at evaluating the efficiency of the sorbent composition, object of the present invention in an ordinary plant management at full regime in guaranteeing complete operating constancy and above all damping of the emission peaks.

During the experiment which lasted for a period of five days, the hourly quantity of waste fed to the two WTE lines, operating at full regime, was kept practically identical (maximum deviation ranging from 500-1200 kg/h); the precursor was injected into the furnace-recovery boiler section, specifically into the post-combustion area (temperature of the fumes around 900-950°C), with a fixed dosage, corresponding to an average effective dosage equal to about 1.14 times the stoichiometric dosage, considering the titre of calcium and magnesium of the precursor and load of the acids present in the fumes and their molar ratio (Ca+Mg) : (S+2Cl), defined for obtaining a purification yield also under the most unfavourable "peak" concentration conditions, in any case higher than 25% with respect to HCl and higher than 70% for $SO_2$.

The average results of the whole test are indicated in Table 7 below:

TABLE 7 - Removal of pollutants and average specific consumption of sodium bicarbonate

| Test conditions | Average concentrations of pollutants at boiler exit (mg/Nm$^3$) | | | Average specific consumption of sodium bicarbonate (kg/t$_{Waste}$) |
|---|---|---|---|---|
| | $[SO_2]$ | $[HCl]$ | $[HF]$ | $NaHCO_3$ |
| Scenario 5.0 | 67.8 | 597.5 | ----- | 15.67 (100%) |
| Scenario 5.1 | 7.7 | 400.8 | ----- | 7.99 (51%) |
| Difference | -60.1 | -196.7 | ----- | -7.68 (- 49%) |
| Abatement yield (%) | 88.6 | 32.9 | ----- | ------ |

Table 8, on the other hand, shows the trend relating to the polluting peaks; it can be observed that also under the conditions in which there are acidity peaks with respect to the average concentration of acid pollutants present in the fumes, with the use of the dolomitic sorbent composition, object of the present invention, a more uniform running of the plant can in any case be maintained, with a reduction in the quantity of alkaline reagents along the line of fumes in order to promote the neutralization of the acid gases before the fumes leaving the stack are introduced into the atmosphere.

TABLE 8 - Reduction in the polluting peaks (on an hourly basis) and specific consumption of sodium bicarbonate

| Scenario 5.0 (Line 5.0) | | Scenario 5.1 (Line 5.1) | | Difference scenari | |
|---|---|---|---|---|---|
| Average hourly conc. of pollutant "peak" leaving boiler (mg/Nm$^3$) | Average hourly specific consumption $NaHCO_3$ (kg/t$_{Waste}$) | Average hourly conc. of pollutant "peak" leaving boiler (mg/Nm$^3$) | Averag hourly specific consumption $NaHCO_3$ (kg/t$_{Waste}$) | Average hourly conc. of pollutants leaving boiler (%) | Average hourly specific consumption $NaHCO_3$ (%) |
| $[SO_2]$ / $[HCl]$ / $NaHCO_3$ | | $[SO_2]$ / $[HCl]$ / $NaHCO_3$ | | $[SO_2]$ / $[HCl]$ / $NaHCO_3$ | |

| $[SO_2]$ | $[HCl]$ | $NaHCO_3$ | $[SO_2]$ | $[HCl]$ | $NaHCO_3$ | $[SO_2]$ | $[HCl]$ | $NaHCO_3$ |
|---|---|---|---|---|---|---|---|---|
| 116.0 | 720.5 | 21.99 | 6.8 | 478.8 | 9.79 | -94.2 | -33.6 | -55.5 |
| 141.9 | 1004.0 | 40.84 | 4.7 | 461.9 | 8.73 | -96.7 | -54.0 | -78.6 |
| 109.2 | 698.6 | 23.78 | 1.8 | 457.6 | 8. 60 | -98.4 | -34.5 | -63.8 |
| 102.1 | 846.3 | 22.57 | 2.0 | 427.4 | 8.51 | -98.4 | -49.5 | -69.1 |
| 113.7 | 852.0 | 31.83 | 5.6 | 532.5 | 13.82 | -95.0 | -35.5 | -56.6 |
| 94.7 | 733.1 | 20.99 | 4.0 | 506.7 | 12.44 | -95.8 | -30.9 | -40.7 |
| 95.2 | 722.5 | 20.38 | 2.9 | 508.2 | 13.09 | -96.9 | -29.7 | -35.8 |
| 92.2 | 574.2 | 17.54 | 1.5 | 347.1 | 7.17 | -98.4 | -39.6 | -59.1 |
| 97.5 | 568.2 | 14.80 | 3.0 | 380.6 | 7.06 | -96.9 | -33.0 | -52.3 |
| 106.3 | 581.9 | 17.78 | 7.1 | 415.5 | 9.73 | -93.3 | -28.6 | -45.3 |
| 111.8 | 643.6 | 20.62 | 13.3 | 472.9 | 9.72 | -88.1 | -26.5 | -52.9 |
| 95.6 | 661.2 | 17.92 | 10.4 | 378.5 | 8.17 | -89.1 | -42.7 | -54.4 |

(continued)

| Scenario 5.0 (Line 5.0) | | Scenario 5.1 (Line 5.1) | | Difference scenari | |
| --- | --- | --- | --- | --- | --- |
| Average hourly conc. of pollutant "peak" leaving boiler (mg/Nm³) | Average hourly specific consumption NaHCO₃ (kg/ t_{Waste}) | Averag hourly conc. of pollutant "peak" leaving boiler (mg/Nm³) | Average hourly specific consumption NaHCO₃ (kg/ t_{Waste}) | Average hourly conc. of pollutants leaving boiler (%) | Average hourly specific consumption NaHCO₃ (%) |
| $[SO_2]$ — $[HCl]$ — NaHCO₃ | | $[SO_2]$ — $[HCl]$ — NaHCO₃ | | $[SO_2]$ — $[HCl]$ | NaHCO₃ |

| $[SO_2]$ | $[HCl]$ | NaHCO₃ | $[SO_2]$ | $[HCl]$ | NaHCO₃ | $[SO_2]$ | $[HCl]$ | NaHCO₃ |
| --- | --- | --- | --- | --- | --- | --- | --- | --- |
| 93.4 | 731.5 | 18.43 | 12.3 | 432.7 | 9.17 | -86.8 | -40.9 | -50.2 |
| 93.6 | 815.2 | 23.29 | 16.8 | 445.2 | 9.08 | -82.1 | -45.4 | -61.0 |
| 115.7 | 842.1 | 19.11 | 15.8 | 486.0 | 10.20 | -86.4 | -42.3 | -46.6 |
| 107.5 | 780.0 | 22.50 | 17.0 | 494.3 | 9.36 | -84.2 | -36.6 | -58.4 |
| 156.3 | 713.4 | 18.37 | 21.1 | 508.1 | 9.94 | -86.5 | -28.8 | -45.9 |
| 197.9 | 988.1 | 32.02 | 30.7 | 542.9 | 11.67 | -84.5 | -45.1 | -63.6 |
| 84.8 | 810.4 | 17.47 | 2.0 | 548.6 | 10.53 | -76.4 | -32.3 | -39.8 |
| 97.9 | 874.9 | 23.08 | 24.9 | 580.5 | 12.83 | -74.5 | -33.7 | -44.4 |
| 108.1 | 866.2 | 23.34 | 28.7 | 570.7 | 12.64 | -73.5 | -34.1 | -45.8 |

EXAMPLE 6

The comparative evaluation of the modifications of the composition and rheology of the fly ashes deriving from a waste combustion process without and with the addition of the precursor object of the present invention, was effected on two series of five samples, each collected under the two different operating conditions of the case cited in EXAMPLE 3 (Scenario 3.0 and Scenario 3.1). The chemical composition of the fly ashes was evaluated by means of X-ray fluorescence spectrometry whereas the softening temperature was determined using a gradient electric furnace according to the following procedure: an aliquot of powder of each sample was mixed with deionized water until a plastic paste was obtained, with which a test-sample was prepared in the form of a pyramid having a square base of 2 cm in height and a base side of 1 cm. The test-samples were dried in an oven at 90°C and were then introduced into the electric furnace. A heating cycle was then established, programmed with a gradient of 5°C/min and the temperature in correspondence with which the pyramid collapsed was registered for each test-sample. The results of the tests are indicated in Table 9.
Table 10, on the other hand, shows the chemical composition and softening temperature of the fly ashes captured, downstream of the furnace-recovery boiler plant section, by the fabric filter.

TABLE 9 - Composition and softening temperature of the fly ashes from the boiler

| Chemical composition percentage of fly ashes (% in mass) | Samples of fly ashes (boiler) | |
| --- | --- | --- |
| | Scenario 3.0 | Scenario 3.1 |
| $SiO_2$ | 16.3-18.0 | 11.9-12.2 |
| $Al_2O_3$ | 8.5-9.3 | 5.3-5.4 |
| $Na_2O$ | 4.5-4.7 | 3.2-4.1 |
| $K_2O$ | 4.2-4.5 | 3.0-3.7 |
| CaO | 24.4-26.5 | 26.5-27.8 |
| MgO | 2.4-2.7 | 8.2-9.6 |
| $SO_{3tot}$ | 18.7-20.4 | 20.2-21.3 |
| $Fe_2O_{3tot}$ | 3.3-3.5 | 2.1-2.5 |
| F | < 0.1-0.3 | 0.3-0.5 |

(continued)

| Chemical composition percentage of fly ashes (% in mass) | Samples of fly ashes (boiler) | |
|---|---|---|
| | Scenario 3.0 | Scenario 3.1 |
| Cl | 1.2-1.3 | 4.3-4.5 |
| Softening temperature (°C) | 1250-1260 | 1300-1320 |

The results of Table 9 show the modified composition of the boiler fly ashes and the increase in the softening temperature following the use of the sorbent composition, object of the present invention.

In this case, the increase in the softening temperature of the fly ashes can be observed, which are also enriched not only in CaO and MgO, but also in $SO_3$, Cl and F.

TABLE 10 - Composition and softening temperature of the fly ashes in the fabric filter

| Chemical composition percentage of fly ashes (% in mass) | Samples of fly ashes (fabric filter) | |
|---|---|---|
| | Scenario 3.0 | Scenario 3.1 |
| Na | 35.6-38.5 | 34.9-38.1 |
| Cl | 46.5-49.2 | 44.3-49.0 |
| $SO_4$ | 7.1-8.6 | 5.2-6.6 |
| K | 1.5-1.8 | 2.0-2.4 |
| Zn | 1.0-1.7 | 1.4-1.9 |
| Br | 0.3-0.5 | 0.2-0.5 |
| Pb | 0.1-0.3 | 0.1-0.5 |
| Ca | 0.3-1.0 | 0.7-1.1 |
| Mg | < 0.1-0.2 | 0.1-0.3 |
| Fe | 0.1-0.3 | 0.1-0.2 |
| F | 0.05-0.3 | 0.1-0.3 |
| Si | 0.1-0.2 | 0.1-0.3 |
| Softening temperature (°C) | 720-750 | 740-750 |

The results of Table 10 show a practically unchanged chemical composition and constancy in the softening temperature for the ashes captured by the fabric filter, downstream of the furnace-recovery boiler plant section, for both operating conditions of the case cited in EXAMPLE 3 (Scenario 3.0 and Scenario 3.1). In particular, it can be seen how, in the two operative cases, the presence of the elements calcium and magnesium is absolutely comparable, as the specific intention of the present invention is to prepare a dolomitic sorbent characterized by an extremely precise particle-size distribution so that the same sorbent can totally exert its pre-neutralization action with respect to the acid compounds present in the fumes and modify the composition and rheology of the fly ashes in the plant section composed of combustion chamber and recovery boiler.

## Claims

1.   A sorbent composition in powder form, comprising calcium hydroxide ($Ca(OH)_2$), magnesium hydroxide ($Mg(OH)_2$) and magnesium oxide (MgO), said composition having a specific surface BET area greater than 20 $m^2$/g, preferably greater than 25 $m^2$/g, even more preferably greater than 35 $m^2$/g, wherein said magnesium oxide (MgO) is present in such an amount that the ratio between the weight of the magnesium oxide (MgO) and the total weight of the calcium and magnesium hydroxide (MgO/ ($Ca(OH)_2$ + Mg $(OH)_2$)) is within the range of 0.15-0.40, even more preferably within the range of 0.22-0.38.

2.   The sorbent composition according to claim 1, having a total pore volume (BJH) higher than 0.07 $cm^3$/g, preferably

ranging from 0.07 to 0.15 cm$^3$/g, more preferably from 0.07 to 0.10 cm$^3$/g.

3. The sorbent composition according to claim 1 or 2, having a partial pore volume of the pores having dimensions ranging from 100 A° to 1000 A° (BJH$_{100-1000\,Å}$) higher than 0.04 cm$^3$/g, preferably within the range of 0.04-0.08 cm$^3$/g.

4. The sorbent composition in powder form according to any one of the preceding claims 1 to 3, wherein the Mg/Ca weight ratio is within the range of 0.53-0.65, even more preferably within the range of 0.58- 0.63.

5. A process for preparing a sorbent composition in powder form according to one or more of claims 1 to 4 comprising at least the following steps:

   (a) calcining a dolomite rock comprising CaCO$_3$ and MgCO$_3$ at a temperature ranging from 900 °C to 1100 °C, obtaining a mixed calcium-magnesium oxide ;
   (b) selecting said mixed oxide so as to obtain a powder fraction substantially free of particles having dimensions lower than 2 mm and particles having dimensions greater than 25 mm;
   (c) hydrating said selected mixed oxide by putting it in contact with an aqueous solution of at least one specific surface modifying agent;
   (d) grinding said hydrated mixed oxide.

6. A method for controlling the emission of polluting substances in a gaseous effluent produced by a combustion process comprising at least the steps of :

   (a) providing a sorbent composition in powder form according to claims 1 to 4;
   (b) contacting said sorbent composition with the gaseous effluent at a temperature within the range of 800°C - 1400 °C.

7. The method according to claim 6, wherein said temperature ranges from 850 to 1200°C, preferably from 900 to 1000°C.

8. The method according to claim 6 or 7, wherein said sorbent composition is introduced in proximity of a combustion zone.

9. The method according to any one of the preceding claims 6 to 8, also comprising a heat-recovery step from said gaseous effluent by means of at least one heat exchanger.

10. The method according to any one of the preceding claims 6 to 9, also comprising a purification step of said gaseous effluent at a temperature lower than 600 °C, preferably lower than 350°C, more preferably ranging from 150°C to 350°C.

**Patentansprüche**

1. Sorbenszusammensetzung in Pulverform, die Calciumhydroxid (Ca(OH)$_2$), Magnesiumhydroxid (Mg(OH)$_2$) und Magnesiumoxid (MgO) umfasst, wobei die Zusammensetzung einen spezifischen BET-Oberflächenbereich von mehr als 20 m$^2$/g, vorzugsweise mehr als 25 m$^2$/g, noch mehr bevorzugt mehr als 35 m$^2$/g, aufweist, wobei das Magnesiumoxid (MgO) in einer solchen Menge vorhanden ist, dass das Verhältnis zwischen dem Gewicht des Magnesiumoxids (MgO) und dem Gesamtgewicht des Calcium- und Magnesiumhydroxids (MgO/(Ca(OH)$_2$ + Mg(OH)$_2$)) im Bereich von 0,15 bis 0,40, noch mehr bevorzugt im Bereich von 0,22 bis 0,38, liegt.

2. Sorbenszusammensetzung nach Anspruch 1 mit einem Gesamtporenvolumen (BJH) von mehr als 0,07 cm$^3$/g, vorzugsweise im Bereich von 0,07 bis 0,15 cm$^3$/g, mehr bevorzugt 0,07 bis 0,10 cm$^3$/g.

3. Sorbenszusammensetzung nach Anspruch 1 oder 2 mit einem Teilporenvolumen der Poren mit Abmessungen im Bereich von 100 Å bis 1000 Å (BJH$_{100-1000\,Å}$) von mehr als 0,04 cm$^3$/g, vorzugsweise im Bereich von 0,04 bis 0,08 cm$^3$/g.

4. Sorbenszusammensetzung in Pulverform nach einem der vorstehenden Ansprüche 1 bis 3, wobei das Gewichtsverhältnis von Mg/Ca im Bereich von 0,53 bis 0,65, noch mehr bevorzugt im Bereich von 0,58 bis 0,63, liegt.

**5.** Verfahren zum Herstellen einer Sorbenszusammensetzung in Pulverform nach einem der Ansprüche 1 bis 4, das zumindest die folgenden Schritte umfasst:

(a) Kalzinieren eines Dolomitsteins, der $CaCO_3$ und $MgCO_3$ umfasst, bei einer Temperatur im Bereich von 900 °C bis 1100 °C, wobei ein gemischtes Calciummagnesiumoxid erhalten wird;
(b) Auswählen des gemischten Oxids, um eine Pulverfraktion zu erhalten, die im Wesentlichen von Partikeln mit Abmessungen kleiner als 2 mm und Partikeln mit Abmessungen größer als 25 mm ist;
(c) Hydrieren des ausgewählten gemischten Oxids durch Inkontaktbringen dieses mit einer wässrigen Lösung zumindest eines die spezifische Oberfläche modifizierenden Mittels;
(d) Zerkleinern des hydrierten gemischten Oxids.

**6.** Verfahren zum Steuern der Emission von Schadstoffen in einem gasförmigen Effluens, das von einem Verbrennungsprozess produziert wird, das zumindest die Schritte umfasst:

(a) Bereitstellen einer Sorbenszusammensetzung in Pulverform nach den Ansprüchen 1 bis 4;
(b) Inkontaktbringen der Sorbenszusammensetzung mit dem gasförmigen Effluens bei einer Temperatur im Bereich von 800 °C bis 1400 °C.

**7.** Verfahren nach Anspruch 6, wobei die Temperatur im Bereich von 850 bis 1200 °C, vorzugsweise 900 bis 1000 °C, liegt.

**8.** Verfahren nach Anspruch 6 oder 7, wobei die Sorbenszusammensetzung in der Nähe einer Verbrennungszone eingebracht wird.

**9.** Verfahren nach einem der vorstehenden Ansprüche 6 bis 8, das außerdem einen Schritt des Wärmerückgewinnens aus dem gasförmigen Effluens mithilfe zumindest eines Wärmetauschers umfasst.

**10.** Verfahren nach einem der vorstehenden Ansprüche 6 bis 9, das außerdem einen Schritt des Reinigens des gasförmigen Effluens bei einer Temperatur von weniger als 600 °C, vorzugsweise weniger als 350 °C, mehr bevorzugt im Bereich von 150 °C bis 350 °C, umfasst.


**Revendications**

**1.** Composition de sorbant sous forme de poudre, comprenant de l'hydroxyde de calcium ($Ca(OH)_2$), de l'hydroxyde de magnésium ($Mg(OH)_2$) et de l'oxyde de magnésium ($MgO$), ladite composition ayant une surface spécifique BET supérieure à 20 $m^2$/g, de préférence supérieure à 25 $m^2$/g, mieux encore supérieure à 35 $m^2$/g, **caractérisée en ce que** ledit oxyde de magnésium ($MgO$) est présent en une quantité telle que le rapport entre le poids de l'oxyde de magnésium ($MgO$) et le poids total des hydroxydes de calcium et de magnésium ($MgO / (CA(OH)_2 + Mg(OH)_2)$) soit situé dans la plage allant de 0,15 à 0,40, mieux encore dans la plage allant de 0,22 à 0,38.

**2.** Composition de sorbant selon la revendication 1, ayant un volume de pores total (BJH) supérieur à 0,07 $cm^3$/g, de préférence situé dans la plage allant de 0,07 à 0,15 $cm^3$/g, mieux encore de 0,07 à 0,10 $cm^3$/g.

**3.** Composition de sorbant selon la revendication 1 ou 2, ayant un volume de pores partiel des pores ayant des dimensions situées dans la plage allant de 100 Å à 1000 Å ($BJH_{100-1000A}$) supérieur à 0,04 $cm^3$/g, de préférence situé dans la plage allant de 0,04 à 0,08 $cm^3$/g.

**4.** Composition de sorbant sous forme de poudre selon l'une quelconque des revendications 1 à 3, **caractérisée en ce que** le rapport en poids Mg/Ca est situé dans la plage allant de 0,53 à 0,65, mieux encore dans la plage allant de 0,58 à 0,63.

**5.** Procédé pour préparer une composition de sorbant sous forme de poudre selon l'une quelconque des revendications 1 à 4, comprenant au moins les étapes suivantes :

(a) calcination d'une roche de dolomite comprenant du $CaCO_3$ et du $MgCO_3$ à une température située dans la plage allant de 900°C à 1100°C, obtention d'un oxyde de calcium-magnésium mixte ;
(b) sélection dudit oxyde mixte de manière à obtenir une fraction de poudre pratiquement exempte de particules ayant des dimensions inférieures à 2 mm et de particules ayant des dimensions supérieures à 25 mm ;

(c) hydratation dudit oxyde mixte sélectionné par mise en contact de celui-ci avec une solution aqueuse d'au moins un agent modificateur de surface spécifique ;

(d) broyage dudit oxyde mixte hydraté.

6. Procédé pour contrôler l'émission de substances polluantes dans un effluent gazeux produit par un procédé de combustion, comprenant au moins les étapes de :

(a) fourniture d'une composition de sorbant sous forme de poudre selon les revendications 1 à 4 ;

(b) mise en contact de ladite composition de sorbant avec l'effluent gazeux à une température située dans la plage allant de 800°C à 1400°C.

7. Procédé selon la revendication 6, **caractérisé en ce que** ladite température est située dans la plage allant de 850 à 1200°C, de préférence de 900 à 1000°C.

8. Procédé selon la revendication 6 ou 7, **caractérisé en ce que** ladite composition de sorbant est introduite à proximité d'une zone de combustion.

9. Procédé selon l'une quelconque des revendications 6 à 8, comprenant aussi une étape de récupération de chaleur à partir dudit effluent gazeux au moyen d'au moins un échangeur de chaleur.

10. Procédé selon l'une quelconque des revendications 6 à 9, comprenant aussi une étape de purification dudit effluent gazeux à une température inférieure à 600°C, de préférence inférieure à 350°C, mieux encore située dans la plage allant de 150°C à 350°C.

Fig.1

EP 2 922 614 B1

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4636379 A
- DE 3620024 A1

- WO 9209528 A

### Non-patent literature cited in the description

- Integrated Pollution Prevention and Control - Reference Document on the Best Available Techniques for Waste Incineration. European Commission, August 2006
- Integrated Pollution Prevention and Control - Reference Document on Best Available Techniques for Large Combustion Plants. European Commission, July 2006

- Controlling opacity, SO3, fouling, and slagging in coal and oil fired utility boilers: technology and experience. *Proceedings of the Western Fuels Symposium 2004, 19th International Conference on Lignite, Brown, and Subbituminous Coals,* 12 October 2004
- **NEWTON G H.** Control of SOx Emissions by In-Furnace Sorbent Injection: Carbonates vs Hydrates. *ENVIRONMENTAL PROGRESS,* 1986, vol. 5 (2
- Some Physico-Chemical Aspects of Dry Sorbent Injection for Removal of HCl and HF from Waste Incinerator Flue Gases. *JAPCA,* 1989, vol. 39 (1), 55-57